# FASCICULE DE BREVET EUROPEEN

(11) **EP 3 843 982 B1**
(45) Date de publication et mention de la délivrance du brevet: **14.12.2022**
(21) Numéro de dépôt: 19774144.0
(22) Date de dépôt: 27.08.2019
(51) Int. Cl.: B29C 70/48, B29C 70/54, B29B 11/16, B29B 15/12, B29D 99/00, B29C 70/24, F01D 5/28

(54) **PROCÉDÉ DE MISE EN FORME PAR COMPACTAGE D'UNE PRÉFORME FIBREUSE POUR LA FABRICATION D'UNE PIÈCE EN MATÉRIAU COMPOSITE**
VERFAHREN ZUM FORMEN EINER FASERIGEN VORFORM DURCH VERDICHTUNG ZUR HERSTELLUNG EINES VERBUNDSTOFFMATERIALTEILS
METHOD FOR SHAPING A FIBROUS PREFORM BY COMPACTING IN ORDER TO PRODUCE A COMPOSITE MATERIAL PART

(30) Priorité: 27.08.2018 FR 1857678
(43) Date de publication de la demande: 07.07.2021
(73) Titulaire: SAFRAN, 75015 Paris (FR)
(72) Inventeur: RAVEY, Christophe, 77550 MOISSY-CRAMAYEL (FR); FOUSSARD, Olivier, 77550 MOISSY-CRAMAYEL (FR); LANFANT, Nicolas, Pierre, 77550 MOISSY-CRAMAYEL (FR); PAYEN, Didier, 77550 MOISSY-CRAMAYEL (FR); TOUZE, Adrien, 77550 MOISSY-CRAMAYEL (FR); VENAT, Romain, 77550 MOISSY-CRAMAYEL (FR)
(74) Mandataire: Cabinet Beau de Loménie
(86) Numéro de dépôt international: PCT/FR2019/051975
(87) Numéro de publication internationale: WO 2020/043988

(56) Documents cités:
- WO-A1-2018/041990
- FR-A1- 3 046 563
- US-A1- 2014 175 709

## Description

### Arrière-plan de l'invention

L'invention concerne des pièces de turbomachine en matériau composite comportant un renfort fibreux densifié par une matrice, la matrice étant obtenue par injection d'une composition liquide contenant un précurseur de la matrice dans une préforme fibreuse.

Un domaine visé est celui d'aubes de turbines à gaz pour moteurs aéronautiques ou turbines industrielles.

La fabrication d'une aube en matériau composite comprend les étapes suivantes:
a) réalisation d'une structure fibreuse par tissage tridimensionnel ou multicouche,
b) placement de la structure fibreuse dans un outillage de compactage et de formage,
c) mise en forme de la structure fibreuse par application d'une pression de compactage sur la structure fibreuse présente dans l'outillage de compactage et de formage de manière à obtenir une préforme fibreuse de l'aube à fabriquer,
d) placement de la préforme fibreuse dans un outillage d'injection,
e) injection d'une composition liquide précurseur d'un matériau de matrice telle qu'une résine dans la préforme fibreuse,
f) transformation de la composition liquide en matrice de manière à obtenir une aube en matériau composite comprenant un renfort fibreux densifié par une matrice.

L'opération de mise en forme par compactage de la texture fibreuse est délicate car il ne faut pas altérer le motif ou l'armure de tissage en surface et au cœur de la structure fibreuse. A cet effet, il est nécessaire que les fibres de la structure fibreuse s'adaptent de manière souple à la déformation imposée à la structure fibreuse, en particulier dans les zones épaisses de la structure fibreuse.

Comme décrit dans le document US 2007/092379, une solution connue consiste à humidifier abondamment la structure fibreuse avec de l'eau avant sa mise en forme, l'eau jouant le rôle de lubrifiant afin de faciliter ainsi les glissements entre les fibres. Toutefois, une fois formée, la préforme doit être séchée afin d'éliminer l'eau dont la présence n'est pas souhaitable lors des opérations ultérieures d'injection et de transformation de la composition liquide précurseur de matrice. En effet, l'eau complique la mise sous vide de l'outillage d'injection. En outre, lors du traitement thermique de transformation de la composition liquide, de la vapeur d'eau peut être piégée dans la préforme, ce qui entraîne la formation de porosités dans la pièce finale qui altèrent les propriétés mécaniques du matériau composite.

Le document WO2018041990 divulgue un procédé de mise en forme par compactage dans un outillage de formage d'une structure fibreuse obtenue par tissage tridimensionnel ou multicouche entre une pluralité de couches de fils de chaîne et une pluralité de couches de fils de trame, les fils de chaque pluralité de couches de fils de chaîne et de couches de fils de trame étant enrobés d'une composition d'ensimage.

### Objet et résumé de l'invention

La présente invention a, par conséquent, pour but de proposer une solution facilitant la mise en forme d'une structure fibreuse par compactage mais sans les inconvénients précités.

A cet effet, l'invention propose notamment un procédé de mise en forme par compactage d'une structure fibreuse obtenue par tissage tridimensionnel ou multicouche entre une pluralité de couches de fils de chaîne et une pluralité de couches de fils de trame, les fils de chaque pluralité de couches de fils de chaîne et de couches de fils de trame étant enrobés d'une composition d'ensimage, caractérisé en ce que la mise en forme comprend une étape de pré-compactage de la structure fibreuse dans un outillage de pré-compactage de manière à réduire l'épaisseur de la structure fibreuse à une épaisseur intermédiaire comprise entre l'épaisseur de la structure fibreuse après tissage et une épaisseur finale déterminée, l'étape de pré-compactage étant suivie d'une étape de compactage final dans un outillage de formage, et en ce que, lors des étapes de pré-compactage et de compactage final, la structure fibreuse est à une température supérieure ou égale à la température de ramollissement de la composition d'ensimage et en ce que le procédé comprend en outre le refroidissement de la préforme fibreuse obtenue après l'étape de compactage final de la structure fibreuse.

Un tel chauffage permet d'assouplir la structure fibreuse et de faciliter sa mise en forme sans perturber le ou les armures ou motifs de tissage de cette dernière. En effet, l'ensimage présent sur les fils participe à la rigidification de la structure fibreuse empêchant ainsi les fibres des fils de tissage de suivre librement la déformation imposée lors du compactage. En chauffant la structure fibreuse à une température supérieure ou égale à la température de ramollissement de la composition d'ensimage enrobant les fils, l'ensimage perd momentanément son caractère tackifiant facilitant ainsi les glissements entre fibres. En outre, avec le procédé de mise en forme de la présente invention, il n'est plus nécessaire d'humidifier la structure fibreuse pour son compactage comme c'est le cas avec les solutions de l'art antérieur. On raccourcit ainsi le temps de fabrication d'une pièce en matériau composite.

En outre, l'étape de pré-compactage permet de mieux contrôler la déformation de la structure fibreuse et facilite la fermeture de l'outillage de formage lors du compactage final. En effet, lorsque la structure fibreuse est humidifiée, l'eau agit comme un lubrifiant qui facilite le glissement entre les fils, ce qui réduit les perturbations ou dérangements du tissage initial lors du compactage. Lorsque la structure est sèche, c'est-à-dire dépourvue d'eau, il n'y a plus de lubrifiant entre les fils. Le risque de désorganiser les fils tissés est alors plus important. A cet effet, le procédé de l'invention propose une étape de pré-compactage pour réduire l'épaisseur de la structure fibreuse à une épaisseur intermédiaire qui permet d'appliquer un effort de compactage inférieur à celui nécessaire pour atteindre l'épaisseur finale visée pour la préforme, ce qui permet de minimiser l'impact du compactage sur l'organisation des fils de la structure. De même, le compactage final est réalisé avec la structure dans un état pré-compactée, c'est-à-dire ayant déjà une épaisseur réduite par rapport à son épaisseur initiale. L'effort de compactage pour le compactage final est lui aussi inférieur à celui nécessaire pour atteindre l'épaisseur finale visée pour la préforme sans pré-compactage, ce qui permet de minimiser l'impact du compactage sur l'organisation des fils de la structure. L'étape de pré-compactage permet également de faciliter la fermeture de l'outillage de formage pour le compactage final car la structure présente déjà une épaisseur réduite par rapport à son épaisseur initiale en sortie de métier à tisser.

Enfin, l'étape de pré-compactage étant réalisée dans un outillage différent de celui utilisé pour l'étape de compactage final, il est possible de contrôler l'état de la structure entre ces deux étapes

Selon une caractéristique particulière du procédé de l'invention, la structure fibreuse est dépourvue d'eau lors des étapes de pré-compactage et compactage final. L'absence d'eau dans la structure fibreuse lors de sa mise en forme par compactage permet de faciliter la mise sous vide de l'outillage lors de l'injection du précurseur liquide de matrice et d'éviter l'apparition de porosité dans le matériau composite de la pièce finale.

Selon une autre caractéristique particulière du procédé de l'invention, la structure fibreuse est chauffée à une température supérieure ou égale à la température de ramollissement de la composition d'ensimage avant la fermeture de l'outillage de pré-compactage ou de formage.

Selon une autre caractéristique particulière du procédé de l'invention, l'outillage de pré-compactage ou de formage comprend des moyens de chauffage aptes à porter la structure fibreuse à une température supérieure ou égale à la température de ramollissement de la composition d'ensimage.

Selon une autre caractéristique particulière du procédé de l'invention, l'outillage de formage comprend des moyens de refroidissement aptes à porter la structure fibreuse à une température inférieure à la température de ramollissement de la composition d'ensimage.

L'invention a également pour objet un procédé de fabrication d'une pièce en matériau composite comprenant les étapes suivantes:
a) réalisation d'une structure fibreuse par tissage tridimensionnel ou multicouche,
b) mise en forme de la structure fibreuse par compactage conformément au procédé de mise en forme selon l'invention,
c) injection d'une composition liquide comprenant au moins un précurseur d'un matériau de matrice dans la préforme fibreuse,
d) transformation de la composition liquide en matrice de manière à obtenir une pièce en matériau composite comprenant un renfort fibreux densifié par une matrice.

Selon une caractéristique particulière du procédé de fabrication de l'invention, l'étape de compactage final de la structure fibreuse, l'injection d'une composition liquide comprenant au moins un précurseur d'un matériau de matrice et la transformation de ladite composition liquide en matrice sont réalisées avec la préforme maintenue dans l'outillage de formage, ledit outillage de formage comprenant au moins un port.

Selon une autre caractéristique particulière du procédé de fabrication de l'invention, la pièce en matériau composite correspond à une aube de soufflante de moteur aéronautique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre de façon très schématique une ébauche fibreuse tissée tridimensionnelle destinée à la réalisation d'une structure fibreuse conformément à un mode de réalisation de l'invention ;
- la figure 2 est une vue schématique d'une structure fibreuse obtenue à partir de l'ébauche fibreuse de la figure 1 ;
- la figure 3 est une vue schématique en perspective éclatée montrant un outillage de formage conformément à un mode de réalisation de l'invention et le placement de la structure fibreuse de la figure 2 à l'intérieur de celui-ci ;
- la figure 4 est une vue schématique en perspective de l'outillage de la figure 3 une fois monté ;
- la figure 5 est une vue schématique en perspective montrant le placement de l'outillage de formage de la figure 4 dans une presse ;
- la figure 6 montre une opération de compactage et de formage avec les outillages de la figure 5 ;
- la figure 7 est une vue schématique en perspective montrant le placement de l'outillage de formage de la figure 6 dans un outillage d'injection ;
- la figure 8 montre une opération d'injection d'une composition liquide de précurseur de matrice dans une préforme fibreuse avec les outillages de la figure 7 ;
- la figure 9 est une vue schématique en perspective d'une aube de turbomachine en matériau composite obtenue conformément à un procédé de fabrication de l'invention.

### Description détaillée de modes de réalisation

L'invention s'applique d'une manière générale à la réalisation de pièces en matériau composite, les pièces étant réalisées à partir d'une préforme fibreuse dans laquelle une composition liquide précurseur d'un matériau de matrice est injectée puis transformée de manière à obtenir une pièce comprenant un renfort fibreux densifié par une matrice.

Dans la suite de la description, la présente invention est décrite en application de la fabrication d'une aube en matériau composite de turbine à gaz, telles qu'une aube de moteur aéronautique.

Le procédé de fabrication d'une aube en matériau composite selon l'invention débute par la réalisation d'une ébauche fibreuse obtenue par tissage tridimensionnel ou par tissage multicouche.

Par "tissage tridimensionnel" ou "tissage 3D", on entend ici un mode de tissage par lequel certains au moins des fils de chaîne lient des fils de trame sur plusieurs couches de trame comme par exemple un "tissage interlock". Par "tissage interlock", on entend ici une armure de tissage 3D dont chaque couche de chaîne lie plusieurs couches de trames avec tous les fils de la même colonne de chaîne ayant le même mouvement dans le plan de l'armure.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

Il peut être avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une structure fibreuse ayant une partie interne, ou cœur, et une partie externe, ou peau adjacente à une surface extérieure de la structure fibreuse, la peau est réalisée de préférence par tissage avec une armure de type toile, satin ou sergé afin de limiter les irrégularités de surface, une armure de type satin procurant en outre un aspect de surface lisse.

Il est possible aussi de faire varier l'armure de tissage tridimensionnel dans la partie de cœur, par exemple en combinant différentes armures interlock, ou une armure interlock et une armure de tissage multicouches, ou encore différentes armures de tissage multicouches. II est possible encore de faire varier l'armure de tissage en peau le long de la surface extérieure.

Un exemple de réalisation d'une structure fibreuse conformément à l'invention est maintenant décrit. Dans cet exemple, le tissage est réalisé sur un métier de type Jacquard.

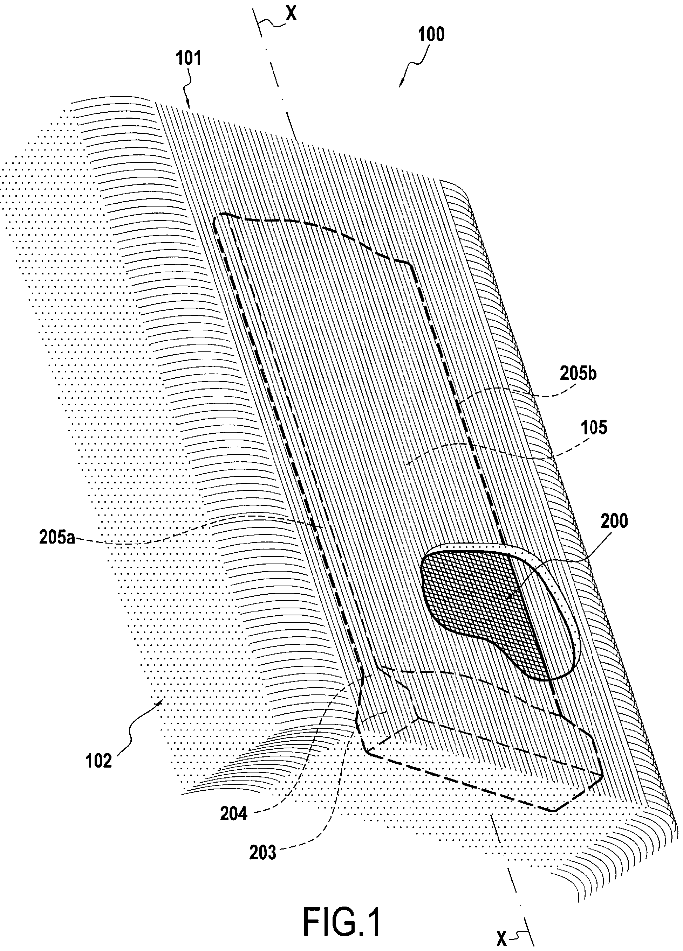

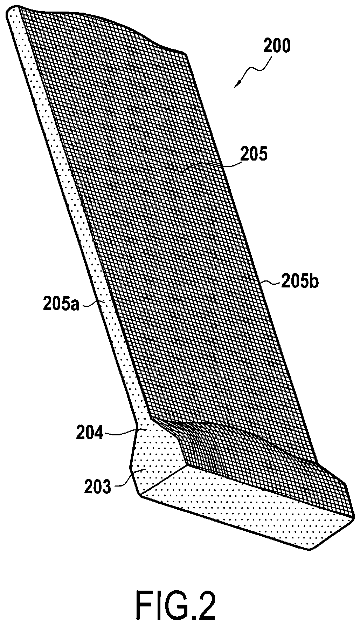

La figure 1 montre très schématiquement le tissage d'une ébauche fibreuse 100 à partir de laquelle peut être extraite une structure fibreuse 200 (figure 2) permettant d'obtenir, après compactage et mise en forme, une préforme de renfort fibreux d'une aube de moteur aéronautique.

L'ébauche fibreuse 100 est obtenue par tissage tridimensionnel, ou tissage 3D, ou par tissage multicouche réalisé de façon connue au moyen d'un métier à tisser de type jacquard sur lequel on a disposé un faisceau de fils de chaînes ou torons 101 en une pluralité de couches, les fils de chaînes étant liés par des couches de trame 102 également disposés en une pluralité de couches, certaines couches de trames comprenant des tresses comme expliqué ci-après en détails. Un exemple détaillé de réalisation d'une préforme fibreuse destinée à former le renfort fibreux d'une aube pour moteur aéronautique à partir d'une ébauche fibreuse tissée 3D est notamment décrit en détail dans les documents US 7 101 154, US 7 241 112 et WO 2010/061140.

Les fils de chaîne et de trame appartiennent au groupe formé des fibres de carbone, des fibres de verre, des fibres de silice, des fibres de carbure de silicium, des fibres d'alumine, des fibres aramides et des fibres de polyamides aromatiques.

Les fils de chaîne et de trame sont enrobés d'une composition d'ensimage.

L'ébauche fibreuse 100 est tissée sous forme d'une bande s'étendant de façon générale dans une direction X correspondant à la direction longitudinale de l'aube à réaliser. Dans l'ébauche fibreuse 100, la structure fibreuse 200 présente une épaisseur variable déterminée en fonction de l'épaisseur longitudinale et du profil de la pale de l'aube à réaliser. Dans sa partie destinée à former une préforme de pied, la structure fibreuse 200 présente une partie de surépaisseur 203 déterminée en fonction de l'épaisseur du pied de l'aube à réaliser. La structure fibreuse 200 se prolonge par une partie d'épaisseur décroissante 204 destinée à former l'échasse de l'aube puis par une partie 205 destinée à former la pale de l'aube. La partie 205 présente dans une direction perpendiculaire à la direction X un profil à épaisseur variable entre son bord 205a destiné à former le bord d'attaque de l'aube et son bord 205b destiné à former le bord de fuite de l'aube à réaliser.

La structure fibreuse 200 est tissée en une seule pièce et doit présenter, après découpe des fils non tissés de l'ébauche 100, la forme et les dimensions quasi-définitives de l'aube (« net shape »). A cet effet, dans les parties de variations d'épaisseur de la structure fibreuse, comme dans la partie d'épaisseur décroissante 204, la diminution d'épaisseur de la préforme est obtenue en retirant progressivement des couches de trame au cours du tissage.

Une fois le tissage de la structure fibreuse 200 dans l'ébauche 100 achevé, on découpe les fils non tissés. On obtient alors la structure fibreuse 200 illustrée sur la figure 2 et tissée en une seule pièce. A ce stade, c'est-à-dire après tissage, la structure fibreuse présente un foisonnement important et une épaisseur initiale qui doit être réduite lors de sa mise en forme ultérieure. A titre d'exemple, la structure fibreuse peut présenter une épaisseur initiale après tissage correspondant à 120% de l'épaisseur finale visée.

L'étape suivante consiste à mettre en forme par compactage la structure fibreuse 200 pour former une préforme fibreuse prête à être densifiée. A cet effet et conformément à l'invention, la structure fibreuse est d'abord soumise à une étape de pré-compactage consistant à réduire l'épaisseur initiale de la préforme à une épaisseur intermédiaire comprise entre l'épaisseur initiale de la structure fibreuse après tissage et une épaisseur finale déterminée. L'étape de pré-compactage est réalisée dans un outillage de pré-compactage (non représenté) qui peut par exemple ressembler à l'outillage de formage 300 décrit ci-après mais avec des dimensions internes de cavité de moulage supérieure afin de réaliser un compactage intermédiaire. A titre d'exemple, l'étape de pré-compactage peut être réalisée de manière à réduire l'épaisseur initiale de la structure fibreuse à une valeur correspondant à environ 113% de l'épaisseur finale visée. En réduisant l'épaisseur initiale de structure fibreuse à une valeur intermédiaire par rapport à l'épaisseur finale visée, on applique sur la structure un effort de compactage modéré par rapport à l'effort de compactage nécessaire pour réduire directement l'épaisseur de la structure fibreuse à l'épaisseur finale visée. On réduit ainsi les risques de perturbations des arrangements entre les fils tissés en particulier lorsque la structure fibreuse est sèche donc dépourvue de lubrifiant.

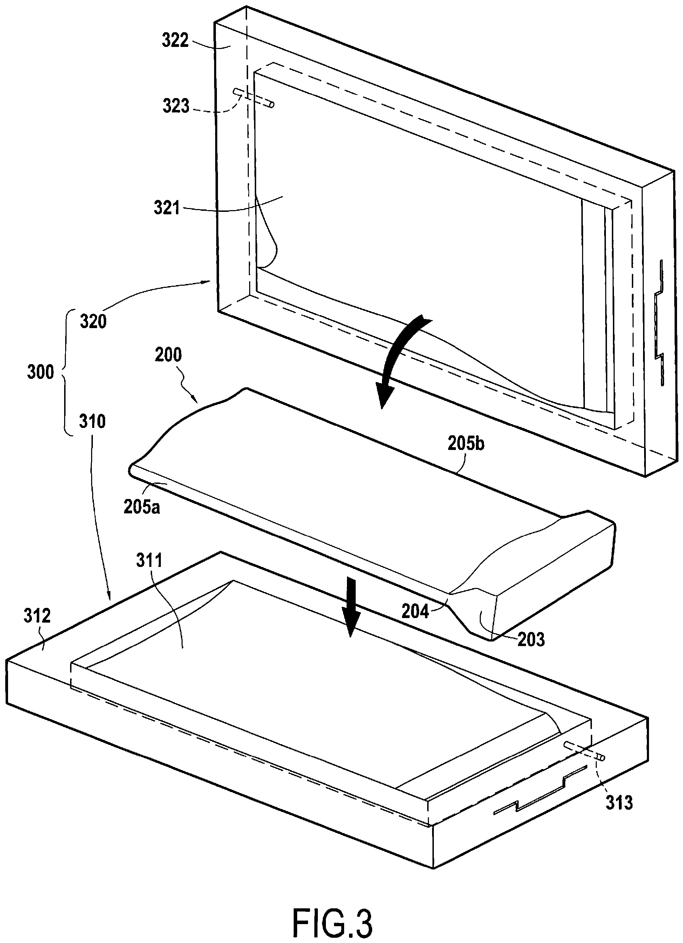

La mise en forme de la structure fibreuse se poursuit avec une étape de compactage final de la structure fibreuse destinée à compléter la réduction d'épaisseur de celle-ci pour atteindre 100% de l'épaisseur finale visée. A cet effet, la structure fibreuse est placée dans un outillage de formage 300 qui, comme illustré sur la figure 3, comprend une première coquille 310 comprenant en son centre une première empreinte 311 correspondant en partie à la forme et aux dimensions de l'aube à réaliser, l'empreinte 311 étant entourée par un premier plan de contact 312. Durant le passage de l'outillage de pré-compactage à l'outillage de formage, il est possible de contrôler l'état de la structure fibreuse en particulier en ce qui concerne l'orientation des fils, ce qui permet d'interrompre le procédé en cas de problème et d'éviter des coûts de fabrication supplémentaires inutiles en cas de défaut majeurs à ce stade de la fabrication.

L'outillage 300 comprend également une deuxième coquille 320 comprenant en son centre une deuxième empreinte 321 correspondant en partie à la forme et aux dimensions de l'aube à réaliser, la deuxième empreinte 321 étant entourée d'un deuxième plan de contact 322 destiné à coopérer avec le premier plan de contact 312 de la première coquille 310.

Les première et deuxième coquilles peuvent être notamment réalisées en matériau métallique tel que de l'aluminium par exemple.

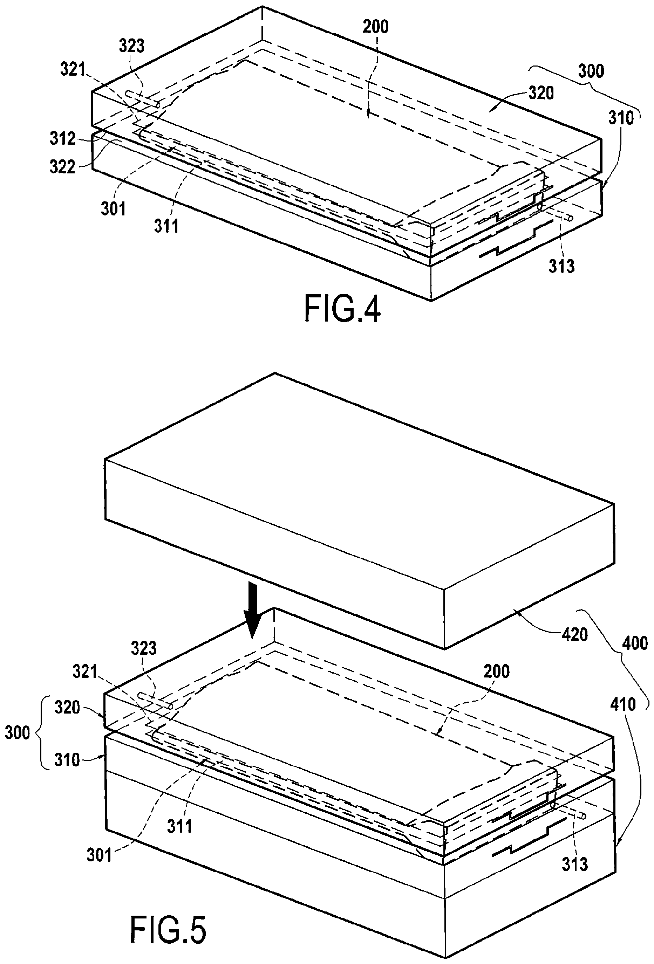

La structure fibreuse 200 est tout d'abord positionnée dans l'empreinte 311 de la première coquille 310, la deuxième coquille 320 étant ensuite posée sur la première coquille 310 afin de fermer l'outillage de formage 300. Une fois l'outillage 300 fermé comme illustré sur la figure 4, les première et deuxième coquilles sont dans une position dite « position d'assemblage », c'est-à-dire une position dans laquelle les première et deuxième empreintes 310, 320 sont placées en regard l'une de l'autre tandis que les premier et deuxième plans de contact 312 et 322 sont également en regard l'un de l'autre. Dans cette configuration, les première et deuxième empreintes 310, 320 définissent ensemble un volume interne 301 ayant la forme de l'aube à réaliser et dans lequel est placée la structure fibreuse 200. Dans l'exemple décrit ici, l'empreinte 311 est destinée à former le côté intrados de la préforme fibreuse d'aube tandis que l'empreinte 321 est destinée à former le côté extrados de la préforme d'aube.

Sur la figure 5, l'outillage de formage 300 avec la structure fibreuse 200 à l'intérieur de celui-ci est placé dans une presse de compactage 400. La presse 400 comprend une partie inférieure 410 sur laquelle repose la première coquille 310 de l'outillage de formage 300 et une partie supérieure 420 placée sur la deuxième coquille 320 de l'outillage de formage 300.

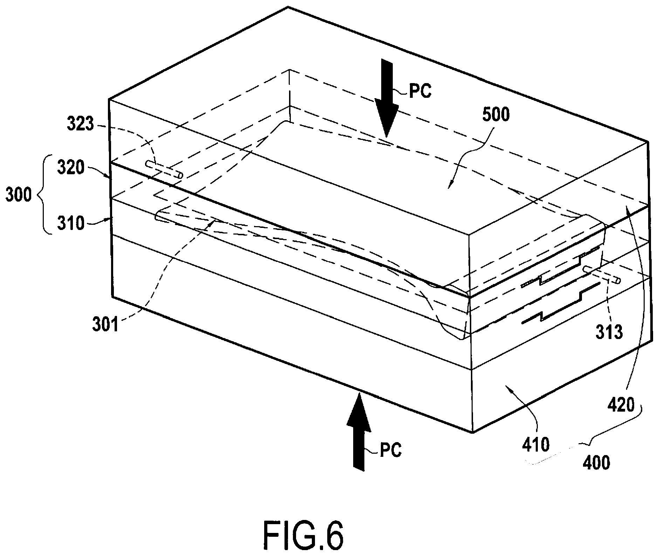

Comme représenté sur la figure 6, l'outillage de formage 300 est soumis à l'application d'une pression de compactage PC appliquée par la presse 400. L'application de la pression PC entraine le rapprochement des première et deuxième coquilles 310 et 320 jusqu'à ce que les premier et deuxième plans de contact 312 et 322 se rejoignent, ce qui permet à la fois de réduire l'épaisseur de la structure fibreuse à l'épaisseur finale visée, de compacter la structure fibreuse selon un taux de compaction déterminé afin d'obtenir un taux de fibres également déterminé et de mettre en forme la structure fibreuse suivant le profil de l'aube à fabriquer. La structure ayant été déjà pré-compactée, l'effort de compactage appliqué pour le compactage final est modéré par rapport à l'effort de compactage nécessaire pour réduire directement l'épaisseur de la structure fibreuse à l'épaisseur finale visée. On réduit ainsi les risques de perturbations des arrangements entre les fils tissés en particulier lorsque la structure fibreuse est sèche donc dépourvue de lubrifiant. On obtient alors une préforme 500 présentant la forme de l'aube à réaliser.

Conformément à l'invention, lors des étapes de pré-compactage et de compactage final, la structure fibreuse est portée à une température supérieure ou égale à la température de ramollissement de la composition d'ensimage enrobant les fils de chaîne et de trame. Un tel chauffage permet d'assouplir la structure fibreuse et de faciliter sa mise en forme sans perturber le ou les armures ou motifs de tissage de cette dernière. En effet, l'ensimage présent sur les fils participe à la rigidification de la structure fibreuse empêchant ainsi les fibres des fils de tissage de suivre librement la déformation imposée lors du compactage. En chauffant la structure fibreuse à une température supérieure ou égale à la température de ramollissement de la composition d'ensimage enrobant les fils, l'ensimage perd momentanément son caractère tackifiant facilitant ainsi les glissements entre fibres. En outre, avec le procédé de mise en forme de la présente invention, il n'est plus nécessaire d'humidifier la structure fibreuse pour son compactage comme c'est le cas avec les solutions de l'art antérieur. Par conséquent, la structure fibreuse est dépourvue d'eau lors du compactage, ce qui permet de s'affranchir de l'étape de séchage ultérieure de la préforme et de raccourcir ainsi le temps de fabrication d'une pièce en matériau composite. L'absence d'eau dans la structure fibreuse lors de sa mise en forme par compactage permet également de faciliter la mise sous vide de l'outillage lors de l'injection du précurseur liquide de matrice et d'éviter l'apparition de porosité dans le matériau composite de la pièce finale.

On entend ici par « température de ramollissement », la température à partir de laquelle la composition ou produit d'ensimage perd son caractère tackifiant réduisant ainsi l'adhérence entre les fibres qui glissent librement les unes par rapport aux autres, la structure fibreuse pouvant ainsi se déformer sans altération du motif ou de l'armure de tissage.

La température de ramollissement de la composition ou produit d'ensimage dépend de sa composition chimique. D'une manière générale, la température de ramollissement minimale d'une composition ou produit d'ensimage est de 50°C.

Le chauffage de la structure fibreuse peut être réalisé avant ou pendant le placement de celle-ci dans l'outillage de pré-compactage et de formage 300. La structure fibreuse peut être notamment chauffée par rayonnement, par exemple au moyen d'une lampe infra-rouge, sur un support indépendant des outillages. Dans ce cas, on s'assure que la structure fibreuse est bien à une température supérieure ou égale à la température de ramollissement de la composition d'ensimage avant la fermeture de l'outillage et application de la pression de compactage.

Selon une variante de mise en œuvre, la structure fibreuse peut être portée à une température supérieure ou égale à la température de ramollissement de la composition d'ensimage une fois celle-ci à l'intérieur de l'outillage de pré-compactage ou de formage 300. A cet effet, l'outillage et la presse peuvent être placés dans une étuve permettant de porter l'outillage et la structure fibreuse à l'intérieur à la température désirée. L'outillage de formage peut également réaliser lui-même le chauffage de la structure fibreuse. Dans ce cas, l'outillage de formage 300 est équipé de moyens de chauffage, par exemple des éléments résistifs noyés dans les parois de l'outillage de formage, qui sont aptes à porter la structure fibreuse à une température supérieure ou égale à la température de ramollissement de la composition d'ensimage.

Après l'étape de mise en forme par compactage, la préforme ainsi obtenue est refroidie à une température inférieure à la température de ramollissement de l'ensimage afin de rigidifier la préforme avant son extraction de l'outillage de formage et d'éviter qu'elle se déforme lors de manipulations ultérieures. A cet effet, l'outillage de formage peut être par exemple refroidi par simple mise à l'air. Le refroidissement de l'outillage de formage peut être accéléré en dotant celui-ci de moyens de refroidissement tels que par exemple des canaux de circulation d'un fluide de refroidissement présents dans les parois de l'outillage. Le refroidissement de la préforme en-dessous de la température de ramollissement de la composition d'ensimage permet de rendre à la composition d'ensimage son caractère tackifiant afin de rigidifier la préforme et de la figer dans sa forme définie.

On procède ensuite à la densification de la préforme fibreuse. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification est réalisée de façon connue en soi suivant le procédé par voie liquide (CVL). Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

L'injection d'une composition liquide précurseur de matrice dans la structure fibreuse ainsi que sa transformation en matrice peuvent être réalisées dans un outillage spécifique distinct de l'outillage de formage 300. Dans ce cas, après mise en forme par compactage, la préforme fibreuse 500 est extraite de l'outillage de formage 300 pour être placée dans un outillage d'injection adaptée au procédé RTM.

Selon une variante de mise en œuvre correspondant à l'exemple décrit ici, les étapes d'injection et de transformation de la composition liquide précurseur de matrice peuvent être avantageusement réalisées en conservant la préforme fibreuse 500 dans l'outillage de formage. On évite ainsi les manipulations réalisées sur la préforme fibreuse pour son extraction de l'outillage de formage et son placement dans un outillage d'injection, ces manipulations étant susceptibles d'endommager ou de déformer la préforme.

Dans ce cas, l'outillage 300 comprend des moyens permettant de réaliser ces étapes. Plus précisément, dans l'exemple décrit ici, la première coquille 310 de l'outillage 300 comprend un port d'injection 313 destiné à permettre l'injection d'une composition liquide précurseur de matrice dans la préforme fibreuse tandis que la deuxième coquille comprend un port d'évacuation destiné à coopérer avec un système de pompage pour la mise sous vide de l'outillage et le tirage d'air lors de l'injection.

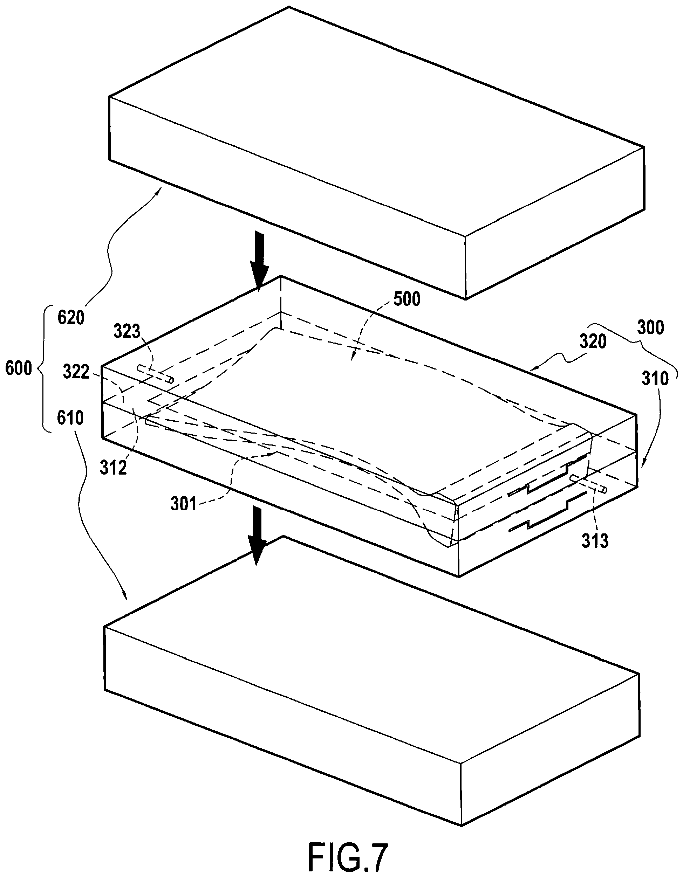

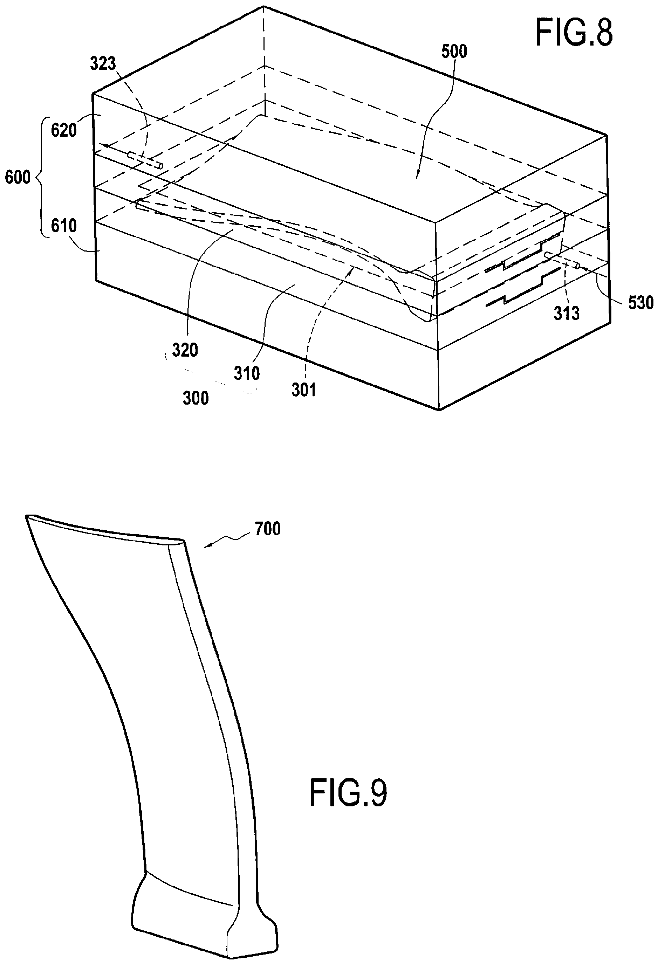

La préforme fibreuse 500 ainsi protégée dans l'outillage de formage 300 peut être transportée sans risque de déformation jusqu'à un outillage d'injection, par exemple un outillage de type moulage par transfert (RTM). Sur les figures 7 et 8, l'outillage 300 est placé entre une partie inférieure 610 et une partie supérieure 620 d'un outillage d'injection 600 (figure 7). La partie inférieure 610 et la partie supérieure 620 de l'outillage 600 sont équipées de moyens de chauffage (non représentés sur les figures 7 et 8).

Une fois l'outillage 600 fermé, on procède ensuite au moulage de l'aube en imprégnant la préforme 500 avec une résine thermodurcissable que l'on polymérise par traitement thermique (figure 8). On utilise à cet effet le procédé bien connu de moulage par injection ou transfert dit RTM ("Resin Transfert Moulding"). Conformément au procédé RTM, on injecte via le port d'injection 313 de la première coquille 310 une résine 530, par exemple une résine thermodurcissable, dans l'espace interne 301 défini entre les deux empreintes 311 et 321 et occupé par la préforme 500. Le port 323 de la deuxième coquille 320 est relié à un conduit d'évacuation maintenu sous pression (non représentés sur la figure 8). Cette configuration permet l'établissement d'un gradient de pression entre la partie inférieure de la préforme 500 où la résine est injectée et la partie supérieure de la préforme située à proximité du port 323. De cette manière, la résine 530 injectée sensiblement au niveau de la partie inférieure de la préforme va imprégner progressivement l'ensemble de la préforme en circulant dans celle-ci jusqu'au port d'évacuation 323 par lequel le surplus est évacué. Bien entendu, les première et deuxième coquilles 310 et 320 de l'outillage 300 peuvent comprendre respectivement plusieurs ports d'injection et plusieurs ports d'évacuation.

La résine utilisée peut être, par exemple, une résine époxyde de classe de température 180 °C (température maximale supportée sans perte de caractéristiques). Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, l'aube est démoulée. Elle peut éventuellement subir un cycle de post-cuisson pour améliorer ses caractéristiques thermomécaniques (augmentation de la température de transition vitreuse). Au final, l'aube est détourée pour enlever l'excès de résine et les chanfreins sont usinés. Aucun autre usinage n'est nécessaire puisque, la pièce étant moulée, elle respecte les cotes exigées.

Comme illustrée sur la figure 13, on obtient une aube 700 formée d'un renfort fibreux densifié par une matrice.

L'invention trouve une application dans la fabrication d'aubes de turbomachine, en particulier d'aubes de soufflante du domaine aéronautique.

## Revendications

1. Procédé de mise en forme par compactage d'une structure fibreuse (200) obtenue par tissage tridimensionnel ou multicouche entre une pluralité de couches de fils de chaîne (101) et une pluralité de couches de fils de trame (102), les fils de chaque pluralité de couches de fils de chaîne et de couches de fils de trame étant enrobés d'une composition d'ensimage,
la mise en forme comprenant une étape de pré-compactage de la structure fibreuse (200) dans un outillage de pré-compactage de manière à réduire l'épaisseur de la structure fibreuse à une épaisseur intermédiaire comprise entre l'épaisseur de la structure fibreuse après tissage et une épaisseur finale déterminée, l'étape de pré-compactage étant suivie d'une étape de compactage final dans un outillage de formage (300) de manière à réduire l'épaisseur de la structure fibreuse à l'épaisseur finale déterminée, et en ce que, lors des étapes de pré-compactage et compactage final, la structure fibreuse (200) est à une température supérieure ou égale à la température de ramollissement de la composition d'ensimage et en ce que le procédé comprend en outre le refroidissement de la préforme fibreuse obtenue après l'étape de compactage final de la structure fibreuse.

2. Procédé de mise en forme selon la revendication 1, dans lequel la structure fibreuse (200) est dépourvue d'eau lors des étapes de pré-compactage et compactage final.

3. Procédé de mise en forme selon la revendication 1 ou 2, dans lequel la structure fibreuse (200) est chauffée à une température supérieure ou égale à la température de ramollissement de la composition d'ensimage avant la fermeture de l'outillage de pré-compactage ou de formage (300).

4. Procédé de mise en forme selon la revendication 1 ou 2, dans lequel l'outillage de pré-compactage et l'outillage de formage comprend des moyens de chauffage aptes à porter la structure fibreuse (200) à une température supérieure ou égale à la température de ramollissement de la composition d'ensimage.

5. Procédé de mise en forme selon l'une quelconque des revendications 1 à 4, dans lequel l'outillage de formage (300) comprend des moyens de refroidissement aptes à porter la structure fibreuse à une température inférieure à la température de ramollissement de la composition d'ensimage.

6. Procédé de fabrication d'une pièce en matériau composite comprenant les étapes suivantes:
a) réalisation d'une structure fibreuse (200) par tissage tridimensionnel ou multicouche,
b) mise en forme de la structure fibreuse (200) par compactage conformément au procédé de mise en forme selon l'une quelconque des revendications 1 à 5,
c) injection d'une composition liquide (530) comprenant au moins un précurseur d'un matériau de matrice dans la préforme fibreuse (500),
d) transformation de la composition liquide en matrice de manière à obtenir une pièce en matériau composite (700) comprenant un renfort fibreux densifié par une matrice.

7. Procédé selon la revendication 6, dans lequel l'étape de compactage final de la structure fibreuse (200), l'injection d'une composition liquide comprenant au moins un précurseur d'un matériau de matrice et la transformation de ladite composition liquide en matrice sont réalisées avec la préforme maintenue dans l'outillage de formage (300), ledit outillage de formage comprenant au moins un port d'injection (313).

8. Procédé selon la revendication 6 ou 7, dans lequel la pièce en matériau composite correspond à une aube (700) de soufflante de moteur aéronautique.

## Patentansprüche

1. Verfahren zum Formen einer faserigen Struktur (200), die durch dreidimensionales oder mehrschichtiges Weben zwischen einer Vielzahl von Kettfädenschichten (101) und einer Vielzahl von Schussfädenschichten (102) erhalten wird, durch Verdichten, wobei die Fäden von jeder Vielzahl von Kettfädenschichten und Schussfädenschichten von einer Schlichtezusammensetzung umhüllt werden,
wobei das Formen einen Schritt des Vorverdichtens der faserigen Struktur (200) in einem Vorverdichtungswerkzeug umfasst, derart dass die Dicke der faserigen Struktur auf eine Zwischendicke vermindert wird, die zwischen der Dicke der faserigen Struktur nach dem Weben und einer bestimmten Enddicke enthalten ist, wobei auf den Schritt des Vorverdichtens ein Schritt des Endverdichtens in einem Formwerkzeug (300) folgt, derart dass die Dicke der faserigen Struktur auf die bestimmte Enddicke vermindert wird, und dadurch, dass während der Schritte des Vorverdichtens und Endverdichtens die faserige Struktur (200) eine Temperatur aufweist, die höher oder gleich der Erweichungstemperatur der Schlichtezusammensetzung ist, und dadurch, dass das Verfahren ferner das Abkühlen der nach dem Schritt des Endverdichtens der faserigen Struktur erhaltenen faserigen Vorform umfasst.

2. Formverfahren nach Anspruch 1, wobei die faserige Struktur (200) bei den Schritten des Vorverdichtens und des Endverdichtens kein Wasser aufweist.

3. Formverfahren nach Anspruch 1 oder 2, wobei die faserige Struktur (200) vor dem Schließen des Vorverdichtungs- oder des Formwerkzeugs (300) auf eine Temperatur von höher oder gleich der Erweichungstemperatur der Schlichtezusammensetzung erwärmt wird.

4. Formverfahren nach Anspruch 1 oder 2, wobei das Vorverdichtungswerkzeug und das Formwerkzeug Heizmittel umfassen, die dazu geeignet sind, die faserige Struktur (200) auf eine Temperatur von höher oder gleich der Erweichungstemperatur der Schlichtezusammensetzung zu bringen.

5. Formverfahren nach einem der Ansprüche 1 bis 4, wobei das Formwerkzeug (300) Kühlmittel umfasst, die dazu geeignet sind, die faserige Struktur auf eine Temperatur zu bringen, die niedriger als die Erweichungstemperatur der Schlichtezusammensetzung ist.

6. Verfahren zur Herstellung eines Verbundstoffteils, das die folgenden Schritte umfasst:
a) Ausführen einer faserigen Struktur (200) durch dreidimensionales oder mehrschichtiges Weben,
b) Formen der faserigen Struktur (200) durch Verdichten nach dem Formverfahren nach einem der Ansprüche 1 bis 5,
c) Einspritzen einer flüssigen Zusammensetzung (530), die mindestens einen Ausgangsstoff eines Matrixstoffs umfasst, in die faserige Vorform (500),
d) Umwandeln der flüssigen Verbindung in Matrix, derart dass ein Verbundstoffteil (700) erhalten wird, das eine durch eine Matrix verdichtete faserige Verstärkung umfasst.

7. Verfahren nach Anspruch 6, wobei der Schritt des Endverdichtens der faserigen Struktur (200), des Einspritzens einer flüssigen Verbindung, die mindestens einen Ausgangsstoff eines Matrixstoffs umfasst, und der Umwandlung der flüssigen Verbindung in Matrix mit der in dem Formwerkzeug (300) gehaltenen Vorform ausgeführt werden, wobei das Formwerkzeug mindestens eine Einspritzöffnung (313) umfasst.

8. Verfahren nach Anspruch 6 oder 7, wobei das Verbundstoffteil einer Schaufel (700) eines Gebläses eines Luftfahrtmotors entspricht.

## Claims

1. A process for shaping, by compaction, a fibrous structure (200) obtained by three-dimensional or multilayer weaving between a plurality of layers of warp yarns (101) and a plurality of layers of weft yarns (102), the yarns of each plurality of layers of warp yarns and layers of weft yarns being coated with a sizing composition, the shaping comprising a step of pre-compaction of the fibrous structure (200) in a pre-compacting tool so as to reduce the thickness of the fibrous structure to an intermediate thickness comprised between the thickness of the fibrous structure after weaving and a determined final thickness, the pre-compaction step being followed by a final compaction step in a forming tool (300) so as to reduce the thickness of the fibrous structure to the determined final thickness, and in that, during the pre-compaction and final compaction steps, the fibrous structure (200) is at a temperature greater than or equal to the softening temperature of the sizing composition and in that the process further comprises the cooling of the fibrous preform obtained after the step of final compaction of the fibrous structure.

2. The shaping process as claimed in claim 1, wherein the fibrous structure (200) is free of water during the pre-compaction and final compaction steps.

3. The shaping process as claimed in claim 1 or 2, wherein the fibrous structure (200) is heated to a temperature greater than or equal to the softening temperature of the sizing composition prior to closing the pre-compacting or forming tool (300).

4. The shaping process as claimed in claim 1 or 2, wherein the pre-compacting tool and the forming tool comprises heating means capable of bringing the fibrous structure (200) to a temperature greater than or equal to the softening temperature of the sizing composition.

5. The shaping process as claimed in any one of claims 1 to 4, wherein the forming tool (300) comprises cooling means capable of bringing the fibrous structure to a temperature below the softening temperature of the sizing composition.

6. A process for manufacturing a composite material part comprising the following steps:
a) production of a fibrous structure (200) by three-dimensional or multilayer weaving,
b) shaping of the fibrous structure (200) by compaction in accordance with the shaping process as claimed in any one of claims 1 to 5,
c) injection of a liquid composition (530) comprising at least one precursor of a matrix material into the fibrous preform (500),
d) transformation of the liquid composition into a matrix so as to obtain a composite material part (700) comprising a fibrous reinforcement densified by a matrix.

7. The process as claimed in claim 6, wherein the step of final compaction of the fibrous structure (200), the injection of a liquid composition comprising at least one precursor of a matrix material and the transformation of said liquid composition into a matrix are carried out with the preform held in the forming tool (300), said forming tool comprising at least one injection port (313).

8. The process as claimed in claim 6 or 7, wherein the composite material part corresponds to an aeroengine fan blade (700).
